(19) Europäisches Patentamt
European Patent Office
Office européen des brevets

(11) **EP 1 300 990 B1**

(12) **EUROPÄISCHE PATENTSCHRIFT**

(45) Veröffentlichungstag und Bekanntmachung des Hinweises auf die Patenterteilung:
**08.08.2007 Patentblatt 2007/32**

(51) Int Cl.:
***H04L 12/56*** *(2006.01)*

(21) Anmeldenummer: **01123257.6**

(22) Anmeldetag: **02.10.2001**

(54) **Verfahren und Kommunikationsvorrichtung zum Durchführen einer Distanz-bezogenen Dienstgüte in einem Kommunikationssystem**

Method and communication apparatus for providing distance-related quality-of-service in a communication system

Procédé et appareil de communication pour fournir une qualité de service en fonction de la distance dans un système de communication

(84) Benannte Vertragsstaaten:
**AT BE CH CY DE DK ES FI FR GB GR IE IT LI LU MC NL PT SE TR**

(43) Veröffentlichungstag der Anmeldung:
**09.04.2003 Patentblatt 2003/15**

(73) Patentinhaber: **SIEMENS AKTIENGESELLSCHAFT 80333 München (DE)**

(72) Erfinder:
• **Ebner, Andre**
  **21073 Hamburg (DE)**
• **Halfmann, Ruediger**
  **67697 Otterberg (DE)**
• **Lott, Matthias**
  **81477 München (DE)**
• **Rohling,Hermann Prof.**
  **38304 Wolfenbüttel (DE)**
• **Schulz,Egon.Dr.**
  **80993 München (DE)**

(56) Entgegenhaltungen:
• **SHENKER S ET AL: "TWO ISSUES IN RESERVATION ESTABLISHMENT" COMPUTER COMMUNICATIONS REVIEW, Bd. 25, Nr. 4, Oktober 1995 (1995-10), Seiten 14-26, XP000541647 ISSN: 0146-4833**

**Beschreibung**

Die Erfindung bezieht sich auf ein Verfahren zum Übertragen von Daten und/oder Signalen in einem Kommunikationsnetz, insbesondere Ad-Hoc-Kommunikationsnetz, mit den oberbegrifflichen Merkmalen des Patentanspruchs 1 bzw. eine Kommunikationsvorrichtung zum Durchführen eines solchen Verfahrens.

Es gibt eine Vielzahl von Szenarien, in denen die Verbreitung von Informationen an entfernte Orte bzw. Personen erwünscht ist. Für die Verbreitung von Informationen können dabei Kommunikationsnetze verschiedenster Art verwendet werden. Mit Blick auf Festnetze sind dabei insbesondere Telekommunikations-Festnetze und Datennetze (LAN: Local Area Network) anzuführen. Mit Blick auf funkgestützte Kommunikationsnetze sind insbesondere zellulare Funk-Kommunikationssysteme, beispielsweise gemäß GSM (Global System for Mobile Communications) oder UMTS (Universal Mobile Telecommunications System), drahtlose Datennetze (WLAN: Wireless Local Area Network) und derzeit in Entwicklung befindliche Ad-Hoc-Kommunikationsnetze aufzuführen. Üblicherweise werden bei derartigen Netzen Verbindungen zwischen zwei Endpunkten, beispielsweise zwei Teilnehmerstationen, oder im Fall von Rundfunksendungen einer Sendestation und einer Vielzahl von Teilnehmerstationen mit Endempfängerstationen aufgebaut. Dabei werden die Daten bzw. Informationen von der sendenden Station aus über in der Regel eine oder mehrere dazwischen befindliche Stationen oder Netzeinrichtungen zu der empfangenden Station übertragen. Die Gesamtstrecke wird somit in eine Vielzahl von Einzelverbindungen unterteilt.

Bei einem großen Teil der Kommunikationsnetze sind für Multimediakommunikation verschiedene Dienste eingeführt, die für eine einzelne Verbindung je nach Bedarf separat oder kombiniert auf einem Übertragungsmedium verwendet werden. Diese Dienste können dabei individuelle Dienstegüten bzw. Dienstecharakteristika (QoS: Quality of Service) zugewiesen bekommen, beispielsweise in der Form einer zulässigen Verzögerung (Delay) bei der Übertragung, einer zulässigen Gesamt-Paketfehlerrate, einer zulässigen Zellverlust-Wahrscheinlichkeit etc. Für eine Endpunkt-zu-Endpunkt-Verbindung, die mehrere einzelne Verbindungen bzw. Hosts aufweisen kann, sind diese Dienstegüte-Anforderungen für einen Dienst bzw. eine Verbindung über die gesamte Endpunkt-zu-Endpunkt-Verbindung gültig. Daher ist es für jede einzelne Verbindung nur zulässig, die Dienstegüte um einen bestimmten Prozentsatz zu verschlechtern. Beispielsweise ist es möglich, einen entsprechenden Bruchteil der gesamt zulässigen Verzögerung für die entsprechende Teilstrecke anzusetzen. Für viele Anwendungen ist die Dienstegüte-Anforderung mit Blick auf die Endpunkt-zu-Endpunkt-Übertragung ein Schlüsselparameter, beispielsweise die zulässige Verzögerung von Endpunkt zu Endpunkt und die Verzögerungsverzerrung (Delay Jitter) für eine Übertragung von Sprachdaten oder Filmdaten.

Bekannt ist allgemein, zum Sicherstellen der Anforderungen für die Übertragung von Endpunkt zu Endpunkt auf späteren Teilstrecken die Dienstegüte-Anforderungen zu erhöhen, um die erforderliche Dienstegüte für die gesamte Endpunkt-zu-Endpunkt-Verbindung zu garantieren, wodurch letztendlich mehr Ressourcen reserviert werden müssen, als tatsächlich benötigt würden.

Bei allgemein bekannten verdrahteten und drahtlosen Kommunikationsnetzen enthalten Datenpakete einige spezielle Felder in dem Kopfabschnitt, wobei die speziellen Felder die Dienstegüte und die durch das Paket bereits erfahrene Verschlechterung berücksichtigen. Bei beispielsweise ATM (Asynchronous Transfer Mode) oder gemäß dem IP (Internet Protocol) ist eine solche Information in einem Lebenszeitfeld (TTL: Time-TO-Live) in dem Kopfabschnitt enthalten. Diese Werte berücksichtigen jedoch nicht die Anzahl der zurückgelegten Verbindungsabschnitte bzw. Sprünge. Sofern bei Kommunikationssystemen eine entsprechende Registrierung erfolgt, wird die Anzahl von bei der Übertragung erfolgten Sprüngen bzw. Hosts im Paket-Kopfabschnitt eingesetzt und signalisiert.

Bei den Mechanismen zum Garantieren der Dienstegüte berücksichtigt jede Verbindung die momentan verfügbaren Werte, z. B. die restliche Lebensdauer der Pakete. Demzufolge werden die Anforderungen an die Dienstegüte letztendlich mit z.B. der Anzahl zurückgelegter Sprünge strenger, da beispielsweise die restliche Lebenszeit reduziert wird und daher für die letzten Verbindungen bzw. Teilverbindungen die größtmögliche Kapazitätsmenge zugewiesen wird, um die steigenden Dienstegüteanforderungen erfüllen zu können.

Würde beispielsweise eine Information über einen Verkehrsunfall mittels einer Nachrichtensignalisierung in Art einer Rundfunksendung übertragen werden, so würde die Dienstegüte bzw. die Bereitstellung von Kapazitäten zur Weiterleitung bei einer solchen Vorgehensweise letztendlich von Übertragungsstation zu Übertragungsstation zunehmen, was wenig sinnvoll ist, da Stationen in der Nähe des Unfallortes dringender informiert werden müssten als entfernte Stationen und nicht umgekehrt. Endpunkt-zu-Endpunkt-Systeme und Rundfunksysteme mit einem solchen Prinzip sind somit für die Übertragung von lokal relevanten Informationen nicht oder nur bedingt geeignet.

Allgemein bekannt ist auch die Verwendung eines Hop- bzw. Sprungzählers, bei dem von einem anfänglichen Wert bei jedem Sprung "-1" addiert wird. Wenn der Wert "0" erreicht wird, wird das Datenpaket entweder nicht weiter geschickt, bzw. es passiert gar nichts mehr, oder eine entsprechende Nachricht wird an eine vorgegebene Station gesendet. Derartige Systeme sind jedoch für die Information bezüglich beispielsweise Daten über einen Unfall ebenfalls nicht geeignet. Neben Problemen bei der Übertragung von Nachrichten über beispielsweise einen Unfall ist auch die Übertragung von Topologieinformationen in Ad-Hoc-Netzen kritisch. In solchen Netzen ändern sich die Standorte der einzelnen Teilnehmerstationen unter Umständen sehr schnell, so dass die Topologieinformationen häufig zu aktualisieren sind.

Aus dem Artikel von S. Shenker und L. Breslau "Two Issues in Reservation Establishment", Computer Communications Review, Band 25, Nr. 3, Oktober 1995, Seiten 14-26, sind ferner mehrere Verfahren zur Reservierung von Übertragungsresourcen in einem Netzwerk mit paketorientierter Datenübertragung über mehrere Vermittlungseinrichtungen mit dem Ziel des Erfüllens vorgegebener Ende-zu-Ende-Übertragungsanforderungen bekannt.

Die Aufgabe der Erfindung besteht darin, ein Verfahren und eine Station zum Übertragen von Daten in einem Kommunikationsnetz zu verbessern.

Diese Aufgabe wird durch das Verfahren mit den Merkmalen des Anspruchs 1 sowie durch die Station eines Kommunikationsnetzes mit Mitteln zum Durchführen eines solchen Verfahrens gemäß den Merkmalen des Anspruchs 7 gelöst. Vorteilhafte Ausgestaltungen sind Gegenstand von abhängigen Ansprüchen.

Vorteilhafterweise erfolgt das Übertragen von Daten in einem Kommunikationsnetz bei einem Mehrsprung- bzw. Multi-Hop-Verfahren derart, dass Anforderungen an die Datenübertragung abhängig von einer geographischen Distanz zu einem bestimmten ursprünglichen Ort, insbesondere Sendeort oder Ereignisort einer ersten Station, bestimmt werden. Dabei werden die Anforderungen so bestimmt, dass von der ersten Station erfernter liegende Stationen einer Teilverbindung für eine jeweils nächste Weiterleitung eine geringere Anforderung an die Datenübertragung zuweisen als der ersten Station näher liegende Stationen.

Dies ermöglicht vorteilhaft eine Entlastung des Kommunikationsnetzes beim Versenden von beispielsweise Rundfunk- und Informationsnachrichten mit nur lokalem Bezug, beispielsweise Warnungen vor Verkehrsunfällen oder Einladungen zu besonderen Veranstaltungen. So kann beispielsweise eine Übertragung bzw. Weiterleitung zu entfernteren Stationen vorteilhaft entfallen. Dies steht im Gegensatz zu den aus dem Stand der Technik für sich bekannten Verfahren, aus denen mit zunehmender Zahl von Zwischenstationen eine Erhöhung und keine Verringerung der Anforderungen an die Übertragung bekannt ist. Bei dieser Vorgehensweise ist auch die Berücksichtigung indirekter Verfahren zur Distanzbestimmung sehr vorteilhaft.

Dazu kann nach einer Ausgestaltung der Erfindung in den empfangenden bzw. weiterleitenden Stationen die Distanz zu dem bestimmten Ort mittels Ortsparametern ermittelt werden, wobei bei einer Vielzahl von Kommunikationssystemen auf bereits vorhandene aber diesbezüglich nicht genutzte Parameter und Daten zurückgegriffen werden kann.

Parameter zum Einstellen der Anforderungen an die Datenübertragung Informationen eines Sendeortes der ersten Station durch eine weiterleitende Station zusammen mit Nutzdaten zu übertragen ist besonders effizient, da keine weiteren Übertragungswege oder Kanäle zu belegen sind.

Gemäß einer darauf beruhenden weiteren Ausgestaltung der Erfindung wird die geographische Distanz zu der ersten Station von den weiterleitenden Stationen durch einen jeweiligen Vergleich einer eigenen geographischen Lage mit den empfangenen Informationen zum Sendeort der ersten Station bestimmt.

Einer weiteren Ausgestaltung zufolge werden die Anforderungen an die Datenübertragung an Teilverbindungen mit einer Funkverbindung niedriger als an Teilverbindungen mit einer verdrahteten Verbindung gesetzt. Dies ermöglicht bei einem Kommunikationsnetz mit sowohl funkgestützten als auch verdrahteten Verbindungen, den funkgestützten Schnittstellen eine höhere Priorität zuzuweisen. Gemeinsamer Aspekt ist dabei die distanzabhängige Zuweisung der Anforderungen an die Datenübertragungen für einzelne Verbindungen einer Vielzahl aufeinanderfolgender Verbindungen zum Überbrücken der gesamten Endpunkt-zu-Endpunkt-Strecke.

Bei dem Kriterium, dass die Anforderungen an die Datenübertragung Anforderungen hinsichtlich zumindest einer Dienstegüte sind, wird berücksichtigt, dass es eine Vielzahl für sich bekannter Dienstegüteparameter gibt, beispielsweise die bei einer Übertragung maximal zulässige Verzögerung.

Eine erfindungsgemäße Station eines Kommunikationsnetzes weist zumindest eine Sende- und/oder Empfangseinrichtung zum Senden bzw. Empfangen von Daten sowie eine Steuereinrichtung zum Steuern der Übertragung der Daten sowie zum Bestimmen einer Distanz der Station zu einer ersten sendenden Station und zum Zuweisen von Anforderungen an die Datenübertragung zu der Teilverbindung für die jeweils nächste Weiterleitung als Mittel zum Durchführen des erfindungsgemäßen Verfahrens auf.

Ein Ausführungsbeispiel wird nachfolgend anhand der Zeichnung näher erläutert. Es zeigt:

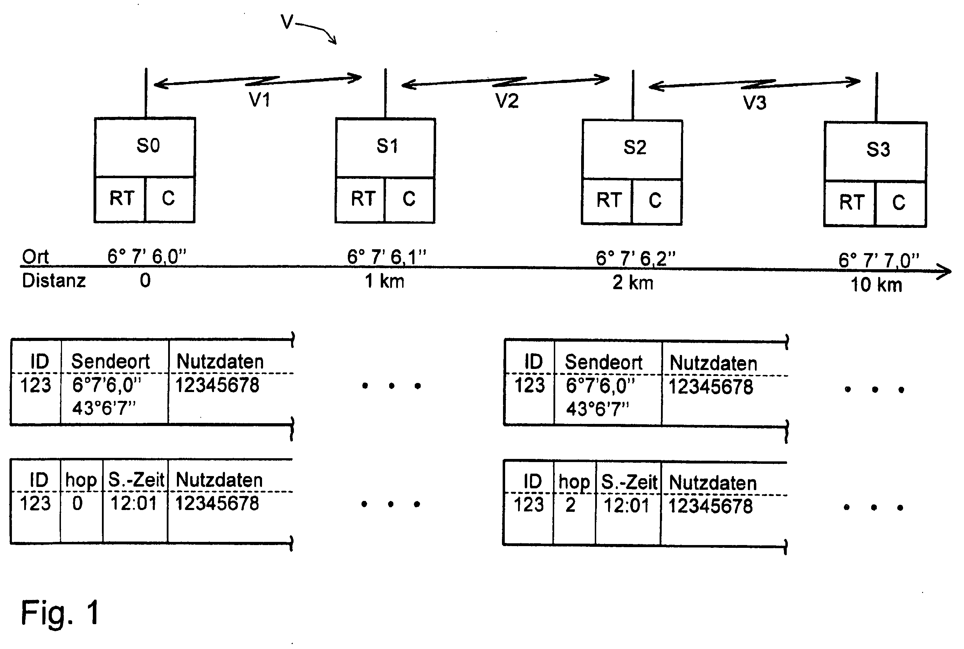

Fig. 1     eine Anordnung von Kommunikationsstationen in einem Kommunikationsnetz, zwischen denen Daten distanzabhängig übertragen werden.

Wie aus Fig. 1 ersichtlich, sollen Daten, worunter alle Formen von Daten, also neben eigentlichen Nutzdaten auch Informationsdaten oder Signalisierungen zu verstehen sind, von einer ersten Kommunikationsstation S0 über eine Schnittstelle V zu weiteren Kommunikationsstationen S1, S2 und S3 übertragen werden. Beim dargestellten Ausführungsbeispiel handelt es sich um eine Übertragung über eine Funkschnittstelle, jedoch sind auch Übertragungen über verdrahtete Verbindungen einsetzbar. Insbesondere ist auch von Station zu Station S0 - S3 wahlweise eine funkgestützte oder kabelgestützte Schnittstelle einsetzbar.

Beim dargestellten Ausführungsbeispiel befindet sich die erste Station S0, die als Daten ursprünglich sendende Station die Daten bereitstellt und versendet beispielsweise an einem bestimmten geographischen Ort, der durch übliche Koordinatenangaben, z. B. 6°7'6''/43°6'7'', bestimmt ist. Die Ortsbestimmung kann dabei vorgegeben werden oder im Fall von mobilen Stationen vorteilhafterweise mittels GPS (Global Positioning System) bestimmt werden. Die Datenübertragung erfolgt beispielsweise über eine erste Teilstrecke bzw. Teilverbindung V1 zu einer zweiten Station S1 an einem von der ersten Station entfernten Ort.

Die zweite Station S1 kann eine eigenständige Teilnehmerstation sein, welche die empfangenen Daten selber verwendet bzw. ausgibt, beispielsweise auf einem Display, kann aber auch zugleich oder alternativ eine weiterleitende Station, also eine Station mit Relaisfunktion sein, und die empfangenen Daten über eine zweite Teilstrecke bzw. Teilverbindung V2 weitersenden.

Empfänger der weitergesendeten Daten ist beim dargestellten Ausführungsbeispiel eine dritte Station S2, an einem von der zweiten Station S1 entfernten Ort. Während beim dargestellten Ausführungsbeispiel der Ort der dritten Station S2 von der ersten Station S0 weiter entfernt ist, als der Ort der zweiten Station S1 von der ersten Station S0, kann sich die dritte Station S2 entfernungsmäßig auch zwischen der ersten und der zweiten Station S0 bzw. S1 befinden.

Beim dargestellten Ausführungsbeispiel besteht eine weitere Funkverbindung über eine dritte Funkschnittstelle bzw. Teilverbindung V3 zu einer vierten Station S3, die in einem beim vorliegenden Beispiel sehr großen Abstand von der ersten Station S0 angeordnet ist.

Die einzelnen Stationen weisen die entsprechenden für deren Betrieb erforderlichen Einrichtungen auf, insbesondere Steuereinrichtungen C zum Betreiben der Stationen und Verwalten und Weiterleiten der Daten, sowie Sende- und/oder Empfangseinrichtungen RT zum Senden bzw. Empfangen von Daten.

Beim dargestellten Ausführungsbeispiel sollen die Daten in Form von Paketdaten übertragen werden, wobei den eigentlichen Nutzdaten ein Kopfabschnitt des Datenpaketes vorangestellt ist. Kopfabschnitte für die Datenpakete an den verschiedenen Stationen bei einer Übertragung, die von der ersten Station S0 ausgeht, sind in Fig. 1 unter den entsprechenden Stationen abgebildet.

In einer ersten Zeile sind dabei Datenpakete dargestellt, in deren Kopfabschnitt neben einer Identifizierungsnummer ID der Sendeort als Information übertragen wird. Gemäß einer alternativen Ausführungsform können, wie dies in der zweiten Zeile dargestellt ist, in dem Kopfabschnitt neben einer Identifizierungsinformation ID = 123, die jedoch nicht zwingend erforderlich ist, auch andere für das nachfolgend beschriebene Verfahren verwendbare Informationen eingetragen sein, beispielsweise die Sendezeit bei der ersten sendenden Station S0 oder die Anzahl der zwischenzeitlich zurückgelegten Teilstrecken V1 - V3 bzw. Sprünge oder Hops.

Um beispielsweise Nachrichten über ein lokales Ereignis zu übertragen, also Daten, die insbesondere nahe an einem Ereignisort oder deren Ursprungsort von großer Bedeutung sind, wobei die Daten jedoch weiter entfernt an Bedeutung verlieren, wird nachfolgend ein Verfahren zum Übertragen derartiger Daten über eine Verbindung V mit mehreren Sprüngen V1 - V3 vorgeschlagen, bei dem den einzelnen Teilstrecken bzw. Teilverbindungen V1, V2 bzw. V3 verschiedene Dienstegüteanforderungen zugewiesen werden.

Beispielsweise kann bei einer Dienstegüte, die von der Verzögerung eines Paketes auf einer Verbindung bzw. Teilstrecke abhängt, die maximal zulässige Verzögerung pro Teilstrecke V1, V2 bzw. V3 variiert werden. Z.B. kann mit einer größeren Anzahl von Sprüngen eine jeweils größere zulässige Verzögerung für die nächste Teilstrecke bzw. Teilverbindung zugelassen werden. Als Dienstgüte oder relevanter Parameter für die Weiterleitung von Datenpaketen über eine weitere Teilstrecke V1 - V3 kann auch der zeitliche Abstand zu der ursprünglichen Sendezeit von der ersten Sendestation oder der räumliche Abstand von dem Sendeort oder dem Ort, den die Daten betreffen, verwendet werden. Dazu werden entsprechende Information über die Anzahl zurückgelegter Sprünge, die Sendezeit oder den Sendeort mit den Daten im Kopfabschnitt des Datenpaketes versendet. Insbesondere ist es auch möglich, diese oder andere verwendbare Daten von Datenstation zu Datenstation anzupassen oder zu ändern.

Dadurch können in jeder einzelnen Station auf der Gesamtverbindung V die entsprechenden Parameter für die nächste Sendung oder das Einstellen einer Weitersendung individuell bestimmt werden. Vorteilhafterweise können dabei für jede Teilstrecke V1 - V3 die minimalen erforderlichen Dienstegüteparameter individuell berücksichtigt werden.

Insbesondere für Rundfunk und ausgewählte Verbreitung an eine Vielzahl von Teilnehmern kann die Anzahl der gesendeten Datenpakete mit der zurückgelegten Strecke von dem Ursprungsort verringert werden, da die Verzögerungsanforderungen geringer angesetzt werden können und daher die Zeitdauer, bis die gleiche Nachricht erneut gesendet wird, ebenfalls entsprechend verlängert werden kann. Dabei kann insbesondere ausgenutzt werden, dass eine Station ein empfangenes Datenpaket löscht oder zumindest nicht weiterleitet, wenn sie ein entsprechendes Datenpaket zu einem früheren Zeitpunkt empfangen oder weitergeleitet hat. Dadurch kann ein Lawineneffekt bei Rundfunksendungen mit Mehrsprungverbindungen reduziert oder sogar vermieden werden, wenn die Zeit zum Übertragen der gleichen Information drastisch reduziert wird und eine erneute Übertragung vermieden wird, wenn eine vorbestimmte Strecke vom Ursprungsort zurückgelegt wurde oder eine vorbestimmte Anzahl von Sprüngen überschritten wurde.

Vorteilhafterweise kann dabei eine Abstufung nach verschiedenen Graden der Anpassung in Abhängigkeit von der Entfernung, der Zeit seit dem ersten Sendezeitpunkt oder der Anzahl von Sprüngen vorgenommen werden. Da es sich um einen vorteilhafterweise selbst organisierenden Algorithmus handelt, kann ein Lawineneffekt leicht unter Kontrolle gehalten werden, beispielsweise in Ad-Hoc-Netzen mit einer teilweise maschenförmigen Topologie der aktiven Stationen.

Wie aus Fig. 1 ersichtlich, kann als Maßstab für die Bewertung bzw. Verarbeitung eines Datenpakets in einer der weiterleitenden Stationen S1, S2, S3 die Entfernung von der Datenquelle oder dem datenbezogenen Ort, hier der Station S0 angesetzt werden. In Fig. 1 wird zur Bestimmung des Ortes beispielsweise eine Angabe der geographischen Lage angegeben, die jeweils in den einzelnen Stationen S0 - S3 abgespeichert und/oder bestimmt wird. Möglich ist auch die Bestimmung einer relativen Entfernung, wie dies in Fig. 1 anhand der Distanzskala dargestellt ist. Diese Daten werden dann in den einzelnen Stationen jeweils mit den korrespondierenden Ortsdaten, insbesondere Sendeortdaten im Kopfabschnitt des Datenpaketes verglichen.

Für den Fall, dass zusätzlich oder alternativ zur direkten Entfernungsbestimmung die indirekte Entfernungsbestimmung über die Anzahl der zurückgelegten Sprünge berücksichtigt wird, setzt jede Station S0 - S3 beim Empfangen oder beim Weiterleiten einen neuen Sprungwert in das entsprechende Kopfabschnittsfeld Hop ein, der um die Zahl 1 gegenüber dem vorherigen Wert in diesem Datenfeld erhöht wird.

Für den Fall, das die zeitliche Distanz zu dem ursprünglichen Sendezeitpunkt als indirektes Entfernungskriterium zusätzlich oder alternativ herangezogen wird, wird von den die Daten empfangenden Stationen entsprechend auf die ursprüngliche Sendezeitinformation im Kopfabschnitt zugegriffen und diese mit der tatsächlichen Zeit in der empfangenden Station S1 - S3 verglichen, wobei dazu eine entsprechende Zeitinformation in den Stationen S0 - S3 bereitzustellen ist.

Bei den drei beispielhaften Kriterien zur Bestimmung der Distanz von einem Sendeort ist zwar die Bestimmung des tatsächlichen Sendeortes bzw. Weiterleitungsortes das genaueste Verfahren, die Verwendung der Anzahl von Sprüngen oder die Verwendung der Zeitdauer seit dem ersten Aussenden sind hingegen oftmals einfacher verwendbare Kriterien, da die erforderlichen Informationen in den Stationen oftmals bereits vorliegen.

Bei letzteren indirekten Verfahren zur Entfernungsbestimmung ist jedoch zu berücksichtigen, das die Anzahl von Sprüngen bei dicht angeordneten Stationen bei einer kurzen zurückgelegten Entfernung die gleiche Anzahl sein kann, wie die Anzahl bei einem mit Stationen dünn besiedelten Raum für das Zurücklegen einer wesentlich größeren Entfernung. Sowohl bei der Anzahl von zurückgelegten Sprüngen als auch der verstrichenen Zeit seit dem ersten Sendezeitpunkt ist weiterhin zu berücksichtigen, dass die Sendung auf nicht linearen sondern kreisförmigen und/oder teilweise rückläufigen Teilstrecken erfolgen kann, so dass eine vermeintlich höhere räumliche Distanz berechnet werden würde, als dies tatsächlich der Fall ist. Besonders bevorzugt wird daher die Verwendung der tatsächlichen Entfernung von einem Ursprungsort S0 der Daten, da diese nicht von der gewählten Route, dem gewählten Routingalgorithmus und dergleichen abhängt.

Ein besonders einfacher Algorithmus zum Bestimmen der maximal zulässigen Verzögerung $t_{max}$ auf einer Teilstrecke bzw. Teilverbindung V2 wird durch die nachfolgende Begleichung gegeben:

$$t_{max} = t_{erster-hop} + t_{erster-hop} \cdot (h \cdot C_1 + h^2 C^2 + \ldots + h^K C_k),$$

wobei $t_{erster-hop}$ die zulässige Verzögerung bei dem ersten Sprung bzw. Hop ist, h die Anzahl der zurückgelegten Sprünge bestimmt und $C_i$, i = 1...K eine Konstante ist, die den Einfluss der Anzahl von Sprüngen auf die Anforderungen bzgl. der Verzögerung berücksichtigt, wobei bei beispielsweise eine lineare Abhängigkeit mit der Anzahl der Sprünge für den Fall von K = 1 gegeben ist.

Mit dem vorgegebenen Schema bestimmt die Quellstation bzw. erste Station S0 die Dienstegüte für den ersten Sprung, beispielsweise eine maximale Verzögerung von 100 ms. Nach dem Empfang des Datenpakets bestimmt die empfangende zweite Station S2 die Dienstegüte für den nächsten Sprung, sofern das Datenpaket weiterzuleiten ist, wobei sie beispielsweise 20% für die Verzögerung addiert, so dass die Dienstegüte bzw. zulässige Verzögerung für den zweiten Sprung bzw. die zweite Teilstrecke V2 dann 120 ms beträgt. Diese Berechnung wird wiederholt, bis die maximal zulässige Anzahl von Sprüngen erreicht ist.

Die zulässige Entfernung bzw. Anzahl von Sprüngen oder maximale Übertragungszeit seit dem Ursprung kann entweder in einem weiteren Feld im Kopfabschnitt signalisiert oder fest in den einzelnen Stationen vorgegeben werden.

Entsprechende Gleichungen können auch für die Verwendung der verstrichenen Zeit seit dem ursprünglichen Sendezeitpunkt oder die tatsächliche Entfernung vom Ursprungsort aufgestellt werden. Besonders effektiv sind Gleichungen, bei denen die verschiedenen Kriterien kombiniert verwendet werden.

Durch diese Lösung wird es möglich, geeignete Dienstegüte-Garantien für jede einzelne Teilverbindung V1 - V3 einer Mehrsprung-Verbindung so zu geben, wie sie tatsächlich benötigt werden, da verschiedene Dienstegüte-Anforderungen zu den individuellen Teilverbindungen V1 - V3 zugewiesen werden. Dadurch können die beschränkten Ressourcen für eine Übertragung besonders effizient verwendet werden, was insbesondere bei funkgestützten Kommunikationssystemen von Bedeutung ist.

Insbesondere kann auch eine Beendigung der Weiterleitung von Daten bestimmt werden. So kann in Fig. 1 die vierte, weit entfernte Station S3 feststellen, dass sie bereits außerhalb des Weitersendebereichs für die empfangenen Daten liegt und die deshalb nicht weitersenden, zumindest nicht in einer Richtung weg von der ursprünglich sendenden ersten Station S0 weitersenden.

Ein Grundgedanke besteht somit darin, die Dienstegüte-Anforderungen mit der zurückgelegten Strecke bzw. Laufzeit und/oder Anzahl durchschrittener Knoten bzw. Stationen herabzusetzen.

Für den Fall, dass die Dienstegüte-Anforderungen in jedem Datenpaket enthalten sind, wie dies beispielsweise für die differenzierenden Dienste (DiffServ) bei den Paketen gemäß dem Internetprotokoll IP der Fall ist, wird jedem Paket ein zusätzlicher Sprungzähler oder ein entsprechendes Feld zur Bestimmung der Distanz oder Laufzeit zugewiesen. In Kombination mit den Dienstegüte-Parametern und dem Sprungzähler oder desgleichen, wird dann in einer Daten empfangenden Station S1 - S3 die entsprechende Dienstegüte für den entsprechenden Sprung bestimmt. Für den Fall, dass die Information der geographischen Lage der Quelle verfügbar ist, kann die Station, die ein Datenpaket weiterleiten soll, wie beispielsweise Station S1 in Fig. 1, das weitere Routen der Daten am besten vornehmen. Dabei wird dann die Entfernung zwischen dem Quellort, das heißt hier der ersten Station S0, und der weiterleitenden Station, hier der zweiten Station S1, verwendet, um die Dienstegüte-Anforderungen in Kombination mit den DiffServ-Parametern oder ohne diese Parameter zu bestimmen.

Im Fall von eingerichteten Verbindungen mit verschiedenen Dienstegüte-Anforderungen, wie dies beispielsweise bei der asynchronen Übertragungs-Betriebsart (ATM) oder integrierten Dienste-Netzen (IntServ) der Fall ist, können die Dienstegüte-Anforderungen mit Blick auf die Verbindung und den Sprungzähler oder die geographische Distanz zwischen Quellort S0 und weiterleitender Station S1, S2 bestimmt werden.

Da der Sprungzähler und die Distanz von dem Quellort bzw. der ersten Station S0 von Station zu Station S1 - S3, die ein Paket durchschritten hat, variiert, können die Dienstegüte-Anforderung bei jeder Teilstrecke bzw. Teilverbindung V1 - V3 einer Endpunkt-zu-Endpunkt-Verbindung (E-t-E) angepasst bzw. geändert werden. Um die gleiche Dienstegüte auf einer Teilverbindung V1 - V3 zwischen beliebigen Stationen S0 - S3 garantieren zu können, sollte der gleiche Algorithmus bei jeder Station verwendet werden, beispielsweise unter Verwendung der vorstehend angegebenen Gleichung für die Berechnung der maximal zulässigen Verzögerung $t_{max}$.

Alternativ kann zum Vermeiden der Berechnung der Strecke zwischen Quellort und weiterleitender Station und/oder der Anzahl durchschrittener Stationen bzw. durchgeführter Sprünge die Dienstegüte-Anforderung in dem Kopfabschnitt eines jeden Datenpaketes mitgeführt werden, wobei diese dann in jeder Station modifiziert wird, so dass die Dienstegüte-Anforderungen nach jeder erfolgreichen Übertragung verändert, insbesondere herabgesetzt werden. Der Änderungsbetrag kann dabei fest vorgegeben sein, kann aber auch abhängig von der Entfernung zwischen ursprünglich sendender erster Station S0 und dem jeweiligen Empfänger bzw. der jeweils empfangenen Station S1 - S3 variieren.

Um Routingtabellen in einem Netz zu aktualisieren, was mit Hilfe entsprechender Signalisierungsnachrichten geschieht, sollten sich die Änderungen in der Netztopologie stärker auf die Routing-Entscheidungen naher Stationen auswirken als Änderungen, die durch entfernte Stationen verursacht werden und somit Änderungen in der Netztopologie weit entfernt zu der benachbarten Station zur Folge haben. Dabei kann es für die näheren Stationen erforderlich sein, deren Teilverbindung zu der Nachbarstation zu ändern, damit die Daten die endgültige Zieladresse erreichen können. Mit größer werdender Anzahl von Sprüngen und größer werdender Distanz verringert sich die Veränderung der Anforderungen und die Route muss idealerweise weniger oft verändert werden, da die Daten den Adressat eher über die ursprünglich geplanten Teilverbindungen erreichen können, als bei Beginn der Versendung. Nur die letzten oder die letzte Verbindung muss wegen Topologieänderungen neu geroutet werden. Das Prinzip des Verringerns der Häufigkeit von Aktualisierungen der Routinginformation, insbesondere Signalisierungsnachrichten, mit zunehmender Anzahl von Sprüngen ist dabei für sich genommen bekannt, wobei die Signalisierungsnachrichten jedoch mit gleicher Priorität aber unterschiedlicher Häufigkeit verschickt werden. Um die höhere Relevanz von Routing-Aktualisierungen in der Nähe der zentralen Netztopologie zu berücksichtigen, werden Rundfunkinformationen mit einer höheren Dienstegüte übertragen, was geringere zulässige Verzögerungswerte über die ersten Verbindungen bedeutet, während die Verzögerungsanforderungen für die folgenden Sprünge herabgesetzt werden. Um die Dienstegüte der Signalisierungsnachrichten für Routing-Aktualisierungen an die zurückgelegte Strecke anzupassen, werden dabei somit die Dienstgüte-Anforderungen mit zunehmender Entfernung von dem Datenursprung herabgesetzt, was die Bedeutung der Topologie-Änderungen für das lokale Routing berücksichtigt.

Ein anderes Beispiel für die Umsetzung eines solchen Verfahrens besteht in der Kombination verdrahteter Verbindungen bzw. Teilverbindungen und drahtloser Verbindungen bzw. Teilverbindungen, da die Dienstegüte-Anforderungen auf drahtlosen Verbindungen sehr viel schwieriger zu garantieren sind, als Dienstegüte-Anforderungen auf verdrahteten Verbindungen. Daher ist es vorteilhaft, den drahtlosen und den verdrahteten Verbindungen bzw. Teilverbindungen verschiedene Dienstegüte-Anforderungen zuzuweisen, die jedoch insgesamt die erforderliche Endpunkt-zu-Endpunkt-Dienstegüte garantieren. In diesem Fall sind die Anforderungen für verdrahtete Verbindungen viel strenger als die Dienstegüte-Anforderungen für die drahtlosen Verbindungen. Falls z. B. die maximal zulässige Endpunkt-zu-

Endpunkt-Verzögerung durch $t_{total}$ ausgedrückt wird und die Endpunkt-zu-Endpunkt-Verbindung aus zwei verdrahteten Verbindungen und einer drahtlosen, funkgestützten Verbindung besteht, dann können die Verzögerungsanforderungen auf der verdrahteten Verbindung beispielsweise $t_{total}/4$ betragen, während die Anforderungen hinsichtlich der Verzögerung für die funkgestützte Verbindung nur $t_{total}/2$ betragen.

In Kombination mit Reservierungsnachrichten (RSVP: ReSerVation setup Protocol) in integrierten Diensten (IntServ) gemäß dem Internetprotokoll IP werden dazu während der Reservierung einer Kapazität auf dem umgekehrten Verbindungsweg vom Empfänger zurück zu dem Sender in dem Paket Informationen eingetragen, wie viele drahtlose Verbindungen auf der Endpunkt-zu-Endpunkt-Verbindung bestanden. Zusätzlich zu der Dienstegüte auf der drahtlosen, funkgestützten Verbindung kann auch dies entsprechend berücksichtigt werden. Mit dieser Information kann die sendende bzw. ursprünglich sendende Station die Pakete auf den verschiedenen Teilstrecken bzw. Teilverbindungen mit verschiedenen Dienstegüte-Anforderungen übertragen, die jeder Teilverbindung während der Reservierungsphase oder mit Hilfe einer zusätzlichen Signalisierungs-Information innerhalb eines jeden Paketes zugewiesen werden, so dass z. B. beim ersten Sprung 10 ms Verzögerung, beim zweiten 20 ms Verzögerung und beim dritten Sprung, dem drahtlosen Sprung, 100 ms Verzögerung zugelassen werden.

Anstelle Daten bzw. Informationen zur direkten oder indirekten Bestimmung der Entfernung wie vorstehend beschrieben in dem Kopfabschnitt eines Datenpaketes zu übertragen, können derartige Informationen auch separat über andere Übertragungswege oder -kanäle übertragen und/oder signalisiert werden.

**Patentansprüche**

1. Verfahren zum Übertragen von Daten in einem Kommunikationsnetz, bei dem die Daten in Teilverbindungen (V1, V2, V3) von einer ersten Station (S0) über zumindest eine zweite Station (S1) zu zumindest einer weiteren Station (S2, S3) übertragen werden, wobei den Teilverbindungen (V1 V2, V3) zwischen den Stationen (S0, S1, S2, S3) für die Datenübertragung verschiedene Anforderungen an die Datenübertragung zugewiesen werden,
wobei die Anforderungen an die Datenübertragung abhängig von einer geographischen Distanz einer weiterleitenden Station zu der ersten Station (S0) jeweils so bestimmt werden, dass von der ersten Station (S0) geographisch entfernter liegende Stationen (S2) der Teilverbindung (V3) für die jeweils nächste Weiterleitung eine geringere Anforderung an die Datenübertragung zuweisen als der ersten Station (S0) geographisch näher liegende Stationen (S1).

2. Verfahren nach Anspruch 1, bei dem
in den weiterleitenden Stationen die geographische Distanz zu der ersten Station (S0) mittels Ortsparametern bestimmt wird.

3. Verfahren nach einem vorstehenden Anspruch, bei dem
zum Einstellen der Anforderungen an die Datenübertragung Informationen eines Sendeortes der ersten Station (S0) durch eine weiterleitende Station (S1, S2) zusammen mit Nutzdaten übertragen werden.

4. Verfahren nach Anspruch 3, bei dem
die geographische Distanz zu der ersten Station (S0) von den weiterleitenden Stationen (S1, S2, S3) durch einen jeweiligen Vergleich einer eigenen geographischen Lage mit den empfangenen Informationen zum Sendeort der ersten Station (S0) bestimmt wird.

5. Verfahren nach einem vorstehenden Anspruch, bei dem
die Anforderungen an die Datenübertragung an Teilverbindungen mit einer Funkverbindung niedriger als an Teilverbindungen mit einer verdrahteten Verbindung gesetzt werden.

6. Verfahren nach einem vorstehenden Anspruch, bei dem
die Anforderungen an die Datenübertragung Anforderungen hinsichtlich zumindest einer Dienstegüte sind.

7. Station (S0, S1, S2, S3) eines Kommunikationsnetzes mit zumindest folgenden Mitteln zum Durchführen der einzelnen Schritte des Verfahrens nach einem vorstehenden Anspruch:

   - einer Sende- und/oder Empfangseinrichtung (RT) zum Senden bzw. Empfangen von Daten,
   - einer Steuereinrichtung (C) zum Steuern der Übertragung der Daten, und
   - einer Bestimmungseinrichtung (C) zum Bestimmen einer geographischen Distanz der Station zu einer ersten sendenden Station (S0) und zum Zuweisen von Anforderungen an die Datenübertragung zu der Teilverbindung für die jeweils nächste Weiterleitung.

**Claims**

1.  Method for transmitting data in a communications network,
    wherein the data is transmitted in partial connections (V1, V2, V3) from a first station (S0) via at least one second station (S1) to at least one further station (S2, S3), the partial connections (V1, V2, V3) between the stations (S0, S1, S2, S3) being assigned different data transmission requirements for the data transmission,
    wherein the data transmission requirements are determined in each case as a function of a geographical distance of a forwarding station from the first station (S0) such that stations (S2) that are located at a greater geographical distance from the first station (S0) assign a lower data transmission requirement to the partial connection (V3) for the next forwarding operation in each case than stations (S1) that are located geographically closer to the first station (S0).

2.  Method according to claim 1, wherein
    the geographical distance from the first station (S0) is determined in the forwarding stations by means of location parameters.

3.  Method according to a preceding claim, wherein
    for the purpose of setting the data transmission requirements information about a transmission location of the first station (S0) is transmitted by a forwarding station (S1, S2) together with payload data.

4.  Method according to claim 3, wherein
    the geographical distance from the first station (S0) is determined by the forwarding stations (S1, S2, S3) by means of a respective comparison of their own geographical position with the received information relating to the transmission location of the first station (S0).

5.  Method according to a preceding claim, wherein
    the data transmission requirements placed on partial connections having a radio link are lower than on partial connections having a wired connection.

6.  Method according to a preceding claim, wherein
    the data transmission requirements are requirements in respect of at least one quality of service.

7.  Station (S0, S1, S2, S3) of a communications network having at least the following means for performing the individual steps of the method according to a preceding claim:

    - a transmitting and/or receiving device (RT) for transmitting and/or receiving data,
    - a control device (C) for controlling the transmission of the data, and
    - a determination device (C) for determining a geographical distance of the station from a first transmitting station (S0) and for assigning requirements in respect of the data transmission to the partial connection for the next forwarding operation in each case.

**Revendications**

1.  Procédé pour transmettre des données dans un réseau de communication, dans lequel les données sont transmises dans des liaisons partielles (V1, V2, V3) d'une première station (S0) via au moins une seconde station (S1) à au moins une autre station (S2, S3), différentes exigences imposées à la transmission de données étant attribuées aux liaisons partielles (V1, V2, V3) entre les stations (S0, S1, S2, S3) pour la transmission de données, les exigences imposées à la transmission de données étant déterminées en fonction d'une distance géographique d'une station transmettrice à la première station (S0) à chaque fois de telle sorte que des stations (S2) situées géographiquement plus loin de la première station S0 attribuent à la liaison partielle (V3) pour la prochaine transmission respective une exigence plus faible à la transmission de données que des stations (S1) situées géographiquement plus près de la première station (S0).

2.  Procédé selon la revendication 1, dans lequel

la distance géographique à la première station (S0) est déterminée au moyen de paramètres locaux dans les stations transmettrices.

3. Procédé selon une revendication précédente, dans lequel, pour le réglage des exigences imposées à la transmission de données, des informations d'un lieu d'émission de la première station (S0) sont transmises par une station transmettrice (S1, S2) en même temps que des données utiles.

4. Procédé selon la revendication 3, dans lequel
la distance géographique à la première station (S0) est déterminée par les stations (S1, S2, S3) transmettrices par une comparaison respective d'un emplacement géographique propre avec les informations reçues concernant le lieu d'émission de la première station (S0).

5. Procédé selon une revendication précédente, dans lequel les exigences imposées à la transmission de données à des liaisons partielles avec une liaison radio sont placées à un niveau plus bas qu'à des liaisons partielles avec une liaison câblée.

6. Procédé selon une revendication précédente, dans lequel
les exigences imposées à la transmission de données sont des exigences concernant au moins une qualité de service.

7. Stations (S0, S1, S2, S3) d'un réseau de communication comprenant au moins les moyens suivants pour la mise en oeuvre des étapes individuelles du procédé selon une revendication précédente :

- un dispositif d'émission et/ou de réception (RT) pour l'envoi resp. la réception de données,
- un dispositif de commande (C) pour la commande de la transmission de données, et
- un dispositif de détermination (C) pour déterminer une distance géographique de la station à une première station (S0) émettrice et pour l'attribution d'exigences imposées à la transmission de données à la liaison partielle pour la prochaine transmission respective.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **S. SHENKER ; L. BRESLAU.** Two Issues in Reservation Establishment. *Computer Communications Review,* Oktober 1995, vol. 25 (3), 14-26